# FASCICULE DE BREVET EUROPEEN

(11) **EP 1 735 517 B1**
(45) Date de publication et mention de la délivrance du brevet: **10.01.2018**
(21) Numéro de dépôt: 05748529.4
(22) Date de dépôt: 07.04.2005
(51) Int. Cl.: E06B 3/66

(54) **VITRAGE AVEC ELEMENT DE MARQUAGE**
EIN MARKIERELEMENT UMFASSENDE VERGLASUNG
GLAZING COMPRISING A MARKING ELEMENT

(30) Priorité: 14.04.2004 FR 0403866
(43) Date de publication de la demande: 27.12.2006
(73) Titulaire: SAINT-GOBAIN GLASS FRANCE, 92400 Courbevoie (FR)
(72) Inventeur: PAQUIER, Michel, 60150 Thourotte (FR)
(74) Mandataire: Saint-Gobain Recherche
(86) Numéro de dépôt international: PCT/FR2005/050215
(87) Numéro de publication internationale: WO 2005/103430

(56) Documents cités:
- US-A- 5 734 343

## Description

L'invention concerne les vitrages munis d'au moins un élément de marquage visible.

On connaît bien entendu comme élément de marquage, la marque du fabricant qui est apposée sur le verre du vitrage par diverses techniques connues, telles que l'impression ou la gravure.

Concernant les vitrages multiples tels que les doubles vitrages qui comprennent un intercalaire en périphérie du vitrage pour espacer deux feuilles de verre entre lesquelles est enfermée une lame de gaz, il est connu de disposer sur cet intercalaire en regard de la lame de gaz un élément de marquage du type certification, marquage CE pour l'Europe par exemple, ou marquage CEKAL pour la France. Cet élément de marquage permet en particulier d'identifier le procédé de fabrication utilisé, la date de fabrication et l'unité de fabrication.

Pour permettre à l'utilisateur du vitrage de s'assurer lors de la livraison que le produit est bien celui attendu quant aux niveaux de performance en isolation thermique, isolation acoustique, protection et sécurité, un étiquetage est prévu sous forme d'étiquette autocollante apposée sur le vitrage. Toutefois, lors du montage du vitrage, cette étiquette est retirée par souci d'esthétique et pour assurer un clair de vue optimum.

L'élément de marquage et l'étiquetage ont donc pour but de fournir certaines caractéristiques relatives au vitrage pour garantir notamment la qualité du vitrage.

Cependant, par manque de place, par exemple sur l'intercalaire d'un vitrage isolant, ou par souci d'esthétique ou du clair de vue pour n'importe quel type de vitrage, il ne peut pas être envisagé d'inscrire une multitude d'éléments de marquage correspondant respectivement à une multitude de caractéristiques techniques liées au vitrage et/ou à sa fabrication.

Or l'utilisateur final du vitrage devient de plus en plus exigeant pour connaître l'ensemble des caractéristiques d'un produit. Pour un vitrage, il s'agit, outre des performances citées plus haut, des dimensions exactes du vitrage, de l'épaisseur des feuilles de verre, de l'épaisseur de la lame de gaz, du type de gaz, du type de verre, du type de revêtements déposés sur le verre pour assurer les diverses fonctionnalités du vitrage (anti-reflet, réflexion de l'ultraviolet, réflexion de l'infrarouge, auto-nettoyante, coloration, thermochrome ...), etc...

Il pourrait néanmoins être envisagé d'écrire toutes ces caractéristiques au moyen de l'étiquetage. Mais une fois l'étiquetage retiré, ces informations risquent d'être égarées. De plus, en cas de revente du produit, le nouvel acheteur n'aura donc certainement plus accès à ces informations et il lui sera très difficile, si ce n'est impossible, de remonter jusqu'au fabricant.

Enfin, pour un vitrage qui est à changer à l'identique incluant donc toutes ses caractéristiques techniques, et dont l'utilisateur ne connaît pas l'origine, ce dernier ne pourra pas être satisfait dans sa demande.

L'invention a donc pour but de fournir un vitrage dont toutes les caractéristiques techniques le constituant, et relatives à sa fabrication, et éventuellement liées à sa destination, que le fabricant accepte de communiquer, puissent être accessibles pour l'utilisateur grâce à des moyens pérennes d'identification.

Selon l'invention, le vitrage est défini par les caractéristique de la revendication 1.

On entend par visible, ce qui est apte à être vu dans la lumière du visible, et nécessairement par l'oeil humain.

On entend par visible de l'extérieur, ce qui se voit sur un vitrage quels que soient le montage et/ou la position du vitrage.

On entend par identifiable visuellement par quiconque, ce qui peut être lu et/ou reproduit oralement ou graphiquement par un individu selon une démarche intellectuelle. Ainsi, est exclu de l'invention comme élément de marquage un code à barres, pour lequel chaque barre ou l'ensemble des barres ne signifie rien en soi pour l'individu.

On entend par caractéristiques relatives au vitrage, l'ensemble des informations liées au vitrage: ses caractéristiques techniques, ses caractéristiques de fabrication, ses caractéristiques liées à sa destination, ses caractéristiques commerciales, etc...

On entend par publiquement, tout individu ; ainsi les informations ne sont pas réservées qu'aux personnes liées directement à la fabrication du vitrage ou liées à sa mise en place dans le produit de destination finale. En effet, il est par exemple connu que par des puces électroniques ou des codes à barres apposés sur le vitrage, qui ne constituent d'ailleurs pas l'élément de marquage de l'invention, on puisse connaître des informations utiles sur la chaîne de fabrication et/ou de montage du vitrage mais ces informations sont uniquement réservées à cette destination, le public n'y ayant pas accès.

Ainsi, toute personne désirant connaître des informations sur le vitrage qu'elle a en sa possession peut par la reconnaissance de l'élément de marquage les identifier, ces informations ne pouvant être inscrites sur le vitrage car prenant trop de place ou étant inesthétiques si elles devaient toutes êtres inscrites.

L'intérêt de l'invention est donc de pouvoir rendre accessible publiquement, c'est-à-dire à quiconque et non pas seulement au fabricant, un ensemble de caractéristiques relatives au vitrage, et cela pendant toute la durée de vie du vitrage. Par ailleurs, même après remplacement ou destruction du vitrage, en ayant reconnu au préalable l'élément de marquage, il est possible d'identifier toutes les caractéristiques du vitrage et d'assurer alors son recyclage adéquat en fonction des matériaux le constituant.

Selon une caractéristique, la suite de caractères est une combinaison de chiffres et/ou de lettres ou d'idéogrammes.

Selon une autre caractéristique, l'élément de marquage est destiné à être reconnu par des moyens de reconnaissance, tels qu'un appareil de lecture à reconnaissance de caractères.

Selon une autre caractéristique, l'élément de marquage est communiqué aux moyens d'identification par des moyens techniques de communication appropriés.

Avantageusement, les moyens d'identification sont constitués par une base de données dans laquelle toutes les caractéristiques relatives au vitrage sont enregistrées sous la forme d'une suite de nombres, nommée identifiant, chaque nombre étant codifié selon un ou plusieurs caractères successifs de l'élément de marquage. L'élément de marquage étant généré à l'occasion de la prise de commande des vitrages par l'unité de fabrication, l'identifiant est donc unique et spécifique à chaque ligne de commande traitée par une unité de fabrication. Les caractères de l'élément de marquage sont un codage binaire ou hexadécimal d'un nombre de l'identifiant.

Selon encore une autre caractéristique, l'élément de marquage ou l'identifiant dans les moyens d'identification reste inchangé tandis que les caractéristiques correspondantes liées au vitrage sont modifiables.

Avantageusement, l'élément de marquage est apposé de manière pérenne sur le vitrage, c'est-à-dire sans pouvoir être dégradé, retiré, à moins bien entendu de détruire le vitrage. Ainsi, le support de l'élément de marquage ne sera par exemple pas constitué d'une étiquette rendue solidaire d'une surface externe et accessible du vitrage.

Ainsi, l'élément de marquage est avantageusement rendu solidaire d'une partie inaccessible depuis l'extérieur du vitrage.

Le vitrage peut comporter le même élément de marquage disposé en plusieurs endroits dudit vitrage. L'élément de marquage est par exemple gravé ou imprimé sur un élément constitutif du vitrage.

Par l'identification de l'élément de marquage, il s'agira non seulement de fournir les données obligatoires en regard des certifications et normes en vigueur, mais aussi toutes les données que le fabricant jugera utiles pour garantir la qualité du produit, détailler les caractéristiques techniques du produit, identifier les références du client.

Ainsi, l'élément de marquage identifie les caractéristiques techniques constituant le vitrage, les caractéristiques relatives à sa fabrication, les caractéristiques commerciales et celles liées à sa destination.

A titres d'exemples non exhaustifs, l'élément de marquage identifie au moins l'une des caractéristiques suivantes :
- le nom commercial du vitrage, et/ou la famille de vitrage, et/ou le type de vitrage;
- la composition du verre du vitrage et/ou les caractéristiques techniques apportées par les couches minces déposées sur le vitrage;
- les dimensions du vitrage;
- le lieu de fabrication du vitrage et/ou la date de fabrication du vitrage;
- le premier client du vitrage;
- des renseignements liés à la première utilisation du vitrage ;
- le type de certification et/ou de normes auxquelles répond le vitrage;
- les informations pécuniaires liées au vitrage.

Le vitrage peut être du type isolant et comporter au moins deux feuilles de verre et au moins une lame de gaz séparant les deux feuilles de verre, l'espacement des deux feuilles de verre étant réalisé par au moins un intercalaire. L'élément de marquage est alors avantageusement agencé sur l'intercalaire et plus particulièrement sur la face en regard de la lame de gaz. Aussi, l'élément de marquage identifie les caractéristiques de la lame de gaz, notamment son épaisseur, et sa composition, et/ou identifie les caractéristiques techniques de l'intercalaire.

Le vitrage peut aussi être feuilleté et comporter au moins deux feuilles de verre et un intercalaire plastique agencé entre les deux feuilles de verre, l'élément de marquage étant par exemple apposé sur l'intercalaire plastique.

L'invention a aussi pour but un procédé d'identification d'un vitrage comportant au moins un élément de marquage visible de l'extérieur de ce vitrage et destiné à être identifiable visuellement par quiconque, le procédé consistant à reconnaître l'élément de marquage, caractérisé en ce qu'après reconnaissance de l'élément de marquage, le procédé consiste à transmettre le contenu de l'élément de marquage à des moyens d'identification qui l'identifient à une information, et à retransmettre publiquement au moins en partie cette information.

Selon une caractéristique, la reconnaissance de l'élément de marquage est effectuée par lecture visuelle ou lecture électronique.

Selon une autre caractéristique, la transmission du contenu de l'élément de marquage aux moyens d'identification peut être effectuée de différentes façons : par courrier, par ligne téléphonique selon une communication orale ou vocale, selon une communication écrite telle qu'une télécopie, un message apparaissant sur tout type d'écran de visualisation (télévision, ordinateur), par internet, ou selon tout autre moyen de communication connu.

Selon encore une autre caractéristique, la retransmission de l'information consiste en l'énumération des données fournies publiquement. Ces données sont retransmises par tous types connus de moyens de communication, tels que de manière orale par téléphone, de manière écrite par courrier, télécopie, ou par envoi d'un message par téléphone ou internet, ou par affichage sur un site internet, ou encore par affichage sur tout écran de visualisation connecté à un réseau de communication.

L'identification du vitrage par quiconque présente de nombreux avantages aussi bien pour le premier client de l'établissement de fabrication (le distributeur, le menuisier, le façadier...), que le client final, ou encore pour l'utilisateur ultérieur au client final après plusieurs années de vie du produit.

Aussi, il est possible grâce à cet élément de marquage d'identifier toutes les caractéristiques du produit et de le fabriquer à l'identique à n'importe quel moment de sa vie, même plusieurs années après sa fabrication.

Toute nouvelle reproduction n'a en outre pas nécessairement besoin d'être effectuée à l'usine d'origine de fabrication, puisque cet élément de marquage permet à toute autre usine d'obtenir l'ensemble des informations utiles à la fabrication du vitrage.

Par ailleurs, un particulier qui désire remplacer son vitrage peut sans se déplacer, facilement communiquer le contenu de l'élément de marquage de son vitrage au menuisier qui, à son tour sans se déplacer, pourra identifier les caractéristiques du vitrage et en commander un nouveau.

Enfin, le fabricant peut, en cas de défaut sur une série de vitrages, facilement informer la clientèle par le biais des médias par exemple, en communiquant l'élément de marquage qui pourra alors être reconnu par le client et identifiera ainsi le vitrage défectueux.

D'autres caractéristiques et avantages de l'invention apparaîtront dans la description qui suit, en regard des dessins annexés sur lesquels :
- la figure 1 est une vue partielle de profil d'un vitrage isolant ;
- la figure 2 est une vue agrandie d'une partie de la figure 1;
- la figure 3 est un diagramme du procédé d'identification du vitrage.

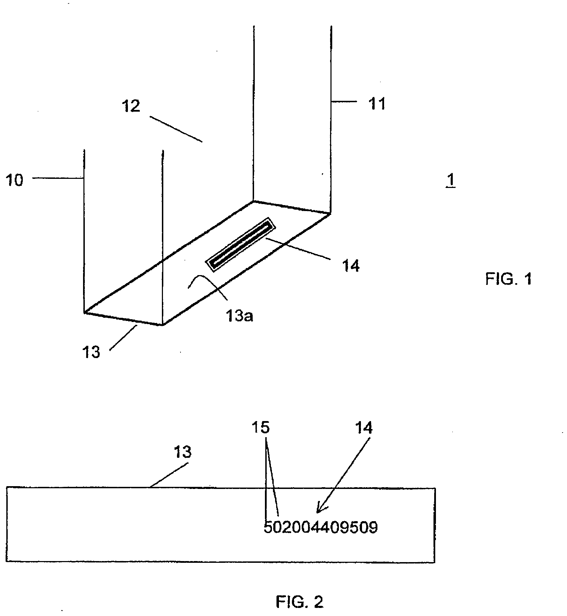

La figure 1 illustre à titre d'exemple de vitrage selon l'invention, un vitrage isolant 1 comportant deux feuilles de verre 10 et 11, et une lame de gaz 12 les séparant. Les deux feuilles de verre sont espacées par la lame de gaz au moyen d'un intercalaire 13 qui est agencé à leur périphérie.

L'intercalaire 13 comporte sur la face 13a en regard de la lame de gaz, pour être visible, un élément de marquage 14.

L'élément de marquage 14, tel qu'illustré sur la figure 2 qui est vue agrandie de l'intercalaire 13, est une suite de caractères 15 qui correspond par exemple à une combinaison de chiffres et/ou de lettres ou d'idéogrammes. Le type d'écriture des caractères peut dépendre du pays auquel est destiné le vitrage afin que l'utilisateur puisse plus facilement déchiffrer l'élément de marquage.

L'élément de marquage est destiné à être pérenne. A cette fin, selon le type de vitrage, les choix, de l'emplacement et respectivement de la manière d'apposition de l'élément de marquage, seront optimisés afin d'éviter une éventuelle dégradation.

Ainsi, en fonction du type de support sur lequel est apposé l'élément de marquage, ce dernier peut être gravé, ou bien imprimé (par une technique de sérigraphie, par des tampons, etc...) au moyen d'une encre adaptée au type de support.

Pour le vitrage isolant, l'élément de marquage est de préférence disposé sur l'intercalaire pour ne pas être dégradé, et en regard de la lame de gaz pour être visible.

Pour un autre type de vitrage, tel qu'un vitrage monolithique, il pourra être préféré comme moyen d'apposition une gravure.

Pour un vitrage feuilleté, il sera par exemple choisi d'imprimer l'élément de marquage sur la feuille intercalaire en plastique.

Cet élément de marquage 14 est donc destiné à être reconnu et identifié par quiconque pour formuler par des moyens adaptés un ensemble de caractéristiques relatives au vitrage, l'intégralité de ces caractéristiques ne pouvant être inscrites sur le vitrage.

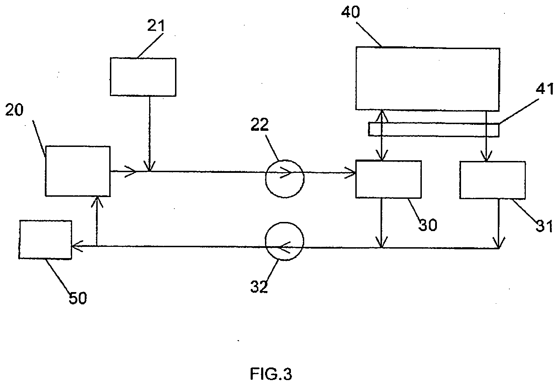

La figure 3 illustre le procédé d'identification du vitrage, par la reconnaissance de l'élément de marquage.

L'élément de marquage est donc visible pour être reconnu par tous moyens de reconnaissance adaptés. Il peut être lu visuellement par tout individu 20 ou par tout dispositif de lecture adapté 21 (appareil à reconnaissance de caractères par exemple).

Pour connaître l'ensemble des caractéristiques relatives au vitrage, il suffit après avoir lu l'élément de marquage de transmettre son contenu (la question) à des moyens de réception 30, qui sont reliés à des moyens d'identification 40 comprenant par exemple une base de données.

Les moyens de réception 30 peuvent aussi bien être un opérateur tel qu'une personne physique, ou bien un appareil de réception adapté (dispositif d'enregistrement vocal, logiciel ...). Ils transmettent la question à la base de données 40.

La base de données 40 assure la transcription des caractères de l'élément de marquage en une liste explicite d'informations, et communique cette liste (la réponse) aux moyens de réception 30 ou à d'autres moyens de liaison 31 qui la retransmettent à l'individu 20 ou à un dispositif d'enregistrement ou de visualisation approprié 50.

La transmission de la question et la retransmission de la réponse peuvent être réalisées par divers moyens techniques adaptés de communication respectifs 22 et 32, tels que le courrier ou le téléphone ou des moyens électroniques de communication du type internet.

Ainsi, l'individu 20 ayant lu l'expression peut par exemple téléphoner la question à un opérateur qui constitue les moyens de réception 30. Cet opérateur ayant accès à la base de données 40, communique alors en retour la réponse relative aux caractéristiques du produit.

La transmission de la question peut également se faire par téléphone, via non pas une personne physique mais via une boîte vocale et/ou avec l'aide des touches du téléphone.

Des moyens électroniques tels qu'intemet ou un message par téléphone de type SMS, ou par télécopie, peuvent bien entendus être utilisés pour communiquer l'expression de l'élément de marquage aux moyens de réception 30.

Cette communication peut tout aussi bien se faire par l'envoi d'un simple courrier.

La réponse consiste en l'énumération de caractéristiques relatives au produit. Cette transmission par les moyens 32 peut se faire par téléphone de manière orale, ou par courrier, ou par télécopie, ou par envoi d'un message électronique par téléphone ou internet, ou encore par affichage sur un site internet.

L'ensemble des moyens de communication 22 et 32 et les moyens de reconnaissance 21 ainsi que les moyens de réception 30 donnés ici à titre d'exemples sont nullement limitatifs et d'autres moyens techniques peuvent être envisagés.

La base de données 40 a en mémoire une information qui regroupe l'ensemble des caractéristiques techniques du vitrage, ses caractéristiques de fabrication, les caractéristiques liées à sa destination, etc... A cette information correspond l'élément de marquage.

L'élément de marquage est limité à un certain nombre de caractères, par exemple une dizaine, par souci de place, ainsi que par souci de compréhension de lecture et de facilité de transmission sans erreur lorsqu'il est par exemple lu par un individu.

Ces caractères sont une ou plusieurs combinaisons de chiffres et de lettres qui correspondent à des codages binaires et hexadécimaux destinés à être compris de manière informatique à l'entrée de la base de données 40. Ces codages représentent une suite de nombre dans la base de données, nommée identifiant qui est représentatif d'une information. L'information contient l'ensemble des caractéristiques relatives au vitrage.

A noter que l'utilisation du codage hexadécimal en langage informatique permet avantageusement de codifier des nombres avec moins de caractères qu'un codage numérique. C'est pourquoi, le codage en hexadécimal sera préféré pour utiliser moins de caractères afin que l'élément de marquage prenne moins de place.

L'identifiant est donné à la fabrication du vitrage et reste immuable.

Ci-après, sont donnés des exemples non exhaustifs de caractéristiques relatives au vitrage :
- nom commercial du vitrage; famille du vitrage, type de vitrage;
- dimensions du vitrage;
- type de verre, épaisseur du verre;
- types de couches avec leur fonctionnalités;
- pour un vitrage isolant : type d'intercalaire, épaisseur de l'intercalaire, type de mastic, type de gaz;
- éléments esthétiques du vitrage (croisillons, couleur des croisillons...);
- texte CEKAL, descriptif relatifs à des certifications, des normes;
- quantité de vitrages commandée;
- prix de vente;
- nom du premier client, renseignements spécifiques souhaités par le premier client (nom du modèle de la fenêtre dans lequel sera monté le vitrage, nom du bâtiment auquel est destiné le vitrage, types de produits d'entretien à utiliser pour la fenêtre), etc...

Cet élément de marquage dont l'identification est sur une base de données indépendante présente l'avantage de pouvoir pour ce même élément de marquage ajouter dans la base de données toutes informations complémentaires ultérieures à la fabrication du vitrage. Par exemple, si le vitrage répond déjà à sa fabrication à des caractéristiques qui ne sont pas encore normalisées mais qui ultérieurement le deviennent, le fabricant ajoutera aisément dans la base de données ces informations normatives auxquelles répond le vitrage, l'élément de marquage restant identique.

Enfin, il est à noter que des filtres de réponse 41 sont de préférence associés à la base de données. Selon la provenance de la question, ces filtres assurent la sélection des informations à communiquer. Ainsi, une usine de fabrication pourra avoir accès à l'ensemble des caractéristiques, tandis que le premier client aura accès à une liste plus limitative.

## Revendications

1. Vitrage (1) comportant au moins un élément de marquage (14), visible de l'extérieur de celui-ci, constitué par une suite de caractères (15) appelée identifiant et comprenant une suite de nombres, **caractérisé en ce que** l'élément de marquage (14) est identifiable visuellement par quiconque et destiné à être communiqué à distance à des moyens d'identification (40), lesdits moyens d'identification intégrant pour un élément de marquage déterminé des caractéristiques relatives au vitrage qui sont destinées à être au moins en partie accessibles publiquement en échange de l'identification de l'élément de marquage, chaque nombre étant codifié par codage binaire ou hexadécimal, selon un ou plusieurs caractères successifs de l'élément de marquage, l'identifiant étant représentatif d'informations comportant les caractéristiques techniques constituant le vitrage, les caractéristiques relatives à sa fabrication, les caractéristiques commerciales et celles liées à sa destination.

2. Vitrage selon la revendication 1, **caractérisé en ce que** la suite de caractères est une combinaison de chiffres et/ou de lettres ou d'idéogrammes.

3. Vitrage selon la revendication 1 ou 2, **caractérisé en ce que** l'élément de marquage est destiné à être reconnu par des moyens de reconnaissance, tels qu'un appareil de lecture à reconnaissance de caractères.

4. Vitrage selon la revendication 1 à 3, **caractérisé en ce que** l'élément de marquage (14) est communiqué aux moyens d'identification par des moyens techniques de communication appropriés.

5. Vitrage selon l'une des revendications 1 à 4, **caractérisé en ce que** les moyens d'identification (40) sont constitués par une base de données dans laquelle toutes les caractéristiques relatives au vitrage sont enregistrées sous la forme d'une suite de nombres, nommée identifiant, chaque nombre étant codifié selon un ou plusieurs caractères successifs de l'élément de marquage.

6. Vitrage selon la revendication 4, **caractérisé en ce que** les caractères de l'élément de marquage sont un codage numérique, ou alpha-numérique, ou binaire, ou décimal, ou encore hexadécimal d'un nombre de l'identifiant.

7. Vitrage selon l'une quelconque des revendications précédentes, **caractérisé en ce que** l'élément de marquage (14) ou l'identifiant dans les moyens d'identification (40) reste inchangé tandis que les caractéristiques correspondantes liées au vitrage sont modifiables.

8. Vitrage selon l'une quelconque des revendications précédentes, **caractérisé en ce que** l'élément de marquage est apposé de manière pérenne sur le vitrage, en particulier est rendu solidaire d'une partie inaccessible depuis l'extérieur du vitrage.

9. Vitrage selon l'une quelconque des revendications précédentes, **caractérisé en ce qu'**il comporte le même élément de marquage (14) disposé en plusieurs endroits du vitrage.

10. Vitrage selon l'une quelconque des revendications précédentes, **caractérisé en ce que** l'élément de marquage (14) identifie au moins l'une des caractéristiques suivantes :
- le nom commercial du vitrage, et/ou la famille de vitrage, et/ou le type de vitrage;
- la composition du verre du vitrage et/ou les caractéristiques techniques apportées par les couches minces déposées sur le vitrage;
- les dimensions du vitrage;
- le lieu de fabrication du vitrage et/ou la date de fabrication du vitrage;
- le premier client du vitrage ;
- des renseignements liés à la première utilisation du vitrage;
- le type de certification et/ou de normes auxquelles répond le vitrage;
- les informations pécuniaires liées au vitrage.

11. Vitrage selon l'une quelconque des revendications précédentes, **caractérisé en ce qu'**il est isolant et comporte au moins deux feuilles de verre (10, 11) et au moins une lame de gaz (12) séparant les deux feuilles de verre, l'espacement des deux feuilles de verre étant réalisé par au moins un intercalaire (13) et **en ce que** l'élément de marquage (14) est agencé sur l'intercalaire (13) et plus particulièrement sur la face (13a) en regard de la lame de gaz.

12. Vitrage selon la revendication 10, **caractérisé en ce que** l'élément de marquage (14) identifie les caractéristiques de la lame de gaz, notamment son épaisseur, et sa composition, et/ou identifie les caractéristiques techniques de l'intercalaire.

13. Vitrage selon l'une quelconque des revendications précédentes, **caractérisé en ce que** l'élément de marquage (14) est gravé ou imprimé sur un élément constitutif du vitrage.

14. Vitrage selon l'une quelconque des revendications précédentes, **caractérisé en ce qu'**il est feuilleté et comporte au moins deux feuilles de verre et un intercalaire plastique agencé entre les deux feuilles de verre, l'élément de marquage (14) étant apposé sur l'intercalaire plastique.

## Patentansprüche

1. Verglasung, (1) umfassend mindestens ein Kennzeichnungselement (14), das von ihrer Außenseite zu sehen ist, bestehend aus einer Zeichenfolge (15), die als Kennung bezeichnet wird, und umfassend eine Zahlenfolge, **dadurch gekennzeichnet, dass** das Kennzeichnungselement (14) visuell durch jedermann identifiziert werden kann und dazu bestimmt ist, über eine Entfernung Identifizierungsmitteln (40) mitgeteilt zu werden, wobei die Identifizierungsmittel für ein bestimmtes Kennzeichnungselement Charakteristiken in Bezug auf die Verglasung integrieren, die dazu bestimmt sind, im Austausch gegen die Identifizierung des Kennzeichnungselements mindestens teilweise öffentlich zugänglich zu sein, wobei jede Zahl durch binäre oder hexadezimale Codierung gemäß einem oder mehreren aufeinanderfolgenden Zeichen des Kennzeichnungselements codiert ist, wobei die Kennung Informationen darstellt, die die technischen Charakteristiken, aus denen die Verglasung besteht, die Charakteristiken in Bezug auf ihre Herstellung, die kommerziellen Charakteristiken und jene in Verbindung mit ihrer Bestimmung umfassen.

2. Verglasung nach Anspruch 1, **dadurch gekennzeichnet, dass** die Zeichenfolge eine Kombination von Ziffern und/oder von Buchstaben oder von Ideogrammen ist.

3. Verglasung nach Anspruch 1 oder 2, **dadurch gekennzeichnet, dass** das Kennzeichnungselement dazu bestimmt ist, durch Erkennungsmittel erkannt zu werden, wie z. B. ein Lesegerät zur Zeichenerkennung.

4. Verglasung nach Anspruch 1 bis 3, **dadurch gekennzeichnet, dass** das Kennzeichnungselement (14) den Identifizierungsmitteln durch geeignete technische Kommunikationsmittel mitgeteilt wird.

5. Verglasung nach einem der Ansprüche 1 bis 4, **dadurch gekennzeichnet, dass** die Identifizierungsmittel (40) aus einer Datenbank bestehen, in der alle Charakteristiken in Bezug auf die Verglasung in Form einer Zahlenfolge, genannt Kennung, registriert sind, wobei jede Zahl gemäß einem oder mehreren aufeinanderfolgenden Zeichen des Kennzeichnungselements codiert sind.

6. Verglasung nach Anspruch 4, **dadurch gekennzeichnet, dass** die Zeichen des Kennzeichnungselements eine numerische oder alphanumerische oder binäre oder dezimale oder auch hexadezimale Codierung der Kennung sind.

7. Verglasung nach einem beliebigender vorherigen Ansprüche, **dadurch gekennzeichnet, dass** das Kennzeichnungselement (14) oder die Kennung in den Identifizierungsmitteln (40) unverändert bleibt, während die entsprechenden Charakteristiken in Verbindung mit der Verglasung modifizierbar sind.

8. Verglasung nach einem beliebigen der vorherigen Ansprüche, **dadurch gekennzeichnet, dass** das Kennzeichnungselement dauerhaft auf der Verglasung angebracht ist, besonders zu einem Bestandteil eines von außen unzugänglichen Teils der Verglasung gemacht wird.

9. Verglasung nach einem beliebigen der vorherigen Ansprüche, **dadurch gekennzeichnet, dass** sie dasselbe Kennzeichnungselement (14) umfasst, das an mehreren Stellen der Verglasung angebracht ist.

10. Verglasung nach einem beliebigen der vorherigen Ansprüche, **dadurch gekennzeichnet, dass** das Kennzeichnungselement (14) mindestens eine der folgenden Charakteristiken identifiziert:
- den Handelsnamen der Verglasung, und/oder die Verglasungsfamilie, und/oder den Typ der Verglasung;
- die Zusammensetzung des Glases der Verglasung und/oder die technischen Charakteristiken, die durch die auf die Verglasung aufgebrachten Dünnschichten bereitgestellt werden;
- die Abmessungen der Verglasung;
- den Herstellungsort der Verglasung und/oder das Herstellungsdatum der Verglasung;
- den ersten Kunden der Verglasung;
- Hinweise in Verbindung mit der ersten Verwendung der Verglasung;
- den Typ der Zertifizierung und/oder der Normen, denen die Verglasung entspricht;
- finanzielle Informationen in Verbindung mit der Verglasung.

11. Verglasung nach einem beliebigen der vorherigen Ansprüche, **dadurch gekennzeichnet, dass** sie isolierend ist und mindestens zwei Glasscheiben (10,11) und mindestens einen Gaszwischenraum (12), der die zwei Glasscheiben trennt, umfasst, wobei der Abstand zwischen den zwei Glasscheiben durch mindestens eine Zwischenlage (13) ausgeführt ist, und dadurch, dass das Kennzeichnungselement (14) auf der Zwischenlage (13) angebracht ist, und spezifischer auf der Seite (13a) gegenüber den Gaszwischenraum.

12. Verglasung nach Anspruch 10, **dadurch gekennzeichnet, dass** das Kennzeichnungselement (14) die Charakteristiken des Gaszwischenraums identifiziert, besonders seine Stärke und seine Zusammensetzung und/oder die technischen Charakteristiken der Zwischenlage identifiziert.

13. Verglasung nach einem beliebigen der vorherigen Ansprüche, **dadurch gekennzeichnet, dass** das Kennzeichnungselement (14) auf einem Bestandteil der Verglasung graviert oder gedruckt ist.

14. Verglasung nach einem beliebigen der vorherigen Ansprüche, **dadurch gekennzeichnet, dass** sie ein Verbund ist und mindestens zwei Glasscheiben und eine Kunststoffzwischenlage, die zwischen den zwei Glasscheiben angeordnet ist, umfasst, wobei das Kennzeichnungselement (14) auf der Kunststoffzwischenlage angebracht ist.

## Claims

1. A glazing unit (1) comprising at least one marking element (14) visible from the outside thereof and consisting of a string of characters (15) termed the identifier and comprising a string of numbers, **characterized in that** the marking element (14) is able to be visually identified by whomsoever and is intended to be communicated remotely to identification means (40), said identification means incorporating, for a given marking element, characteristics relating to the glazing unit which are intended to be at least partly accessible to the public in exchange for the identity of the marking element, each number being coded by a binary or hexadecimal coding on one or more successive characters of the marking element, the identifier representing items of information comprising the technical characteristics that make up the glazing unit, the characteristics relating to its manufacture, the commercial characteristics and those associated with its destination.

2. The glazing unit as claimed in claim 1, **characterized in that** the string of characters is a combination of numerals and/or of letters or of pictorial symbols.

3. The glazing unit as claimed in claim 1 or 2, **characterized in that** the marking element is intended to be recognized by recognition means, such as character-recognition reader equipment.

4. The glazing unit as claimed in claims 1 to 3, **characterized in that** the marking element (14) is communicated to the identification means by appropriate technical communications means.

5. The glazing unit as claimed in one of claims 1 to 4, **characterized in that** the identification means (40) consist of a database in which all the characteristics relating to the glazing unit are recorded in the form of a string of numbers, termed the identifier, each number being coded on one or more successive characters of the marking element.

6. The glazing unit as claimed in claim 4, **characterized in that** the characters of the marking element are a numeric or alphanumeric or binary or decimal or alternatively hexadecimal coding of a number in the identifier.

7. The glazing unit as claimed in any one of the preceding claims, **characterized in that** the marking element (14) or the identifier in the identification means (40) remains unchanged while the corresponding characteristics associated with the glazing unit can be altered.

8. The glazing unit as claimed in any one of the preceding claims, **characterized in that** the marking element is affixed in perpetuity to the glazing unit, in particular is secured to a part of the glazing unit that is inaccessible from the outside.

9. The glazing unit as claimed in any one of the preceding claims, **characterized in that** it comprises the same marking element (14) arranged at several points on the glazing unit.

10. The glazing unit as claimed in any one of the preceding claims, **characterized in that** the marking element (14) identifies at least one of the following characteristics:
- the commercial name of the glazing unit, and/or the family of glazing unit, and/or the type of glazing unit;
- the composition of the glass in the glazing unit and/or the technical characteristics afforded by the thin layers deposited on the glazing unit;
- the dimensions of the glazing unit;
- the place of manufacture of the glazing unit and/or the date of manufacture of the glazing unit;
- the first customer of the glazing unit;
- information associated with the first use of the glazing unit;
- the type of certification and/or of standards that the glazing unit meets;
- pecuniary information associated with the glazing unit.

11. The glazing unit as claimed in any one of the preceding claims, **characterized in that** it is an insulating unit and comprises at least two sheets of glass (10, 11) and at least one gas-filled cavity (12) separating the two sheets of glass, the spacing of the two sheets of glass being achieved by at least one interlayer (13), and **in that** the marking element (14) is arranged on the interlayer (13) and more particularly on the face (13a) facing the gas-filled cavity.

12. The glazing unit as claimed in claim 10, **characterized in that** the marking element (14) identifies the characteristics of the gas-filled cavity, particularly its thickness, and its composition, and/or identifies the technical characteristics of the interlayer.

13. The glazing unit as claimed in any one of the preceding claims, **characterized in that** the marking element (14) is engraved or printed onto an element that makes up the glazing unit.

14. The glazing unit as claimed in any one of the preceding claims, **characterized in that** it is laminated and comprises at least two sheets of glass and a plastic interlayer arranged between the two sheets of glass, the marking element (14) being affixed to the plastic interlayer.
